# EUROPEAN PATENT APPLICATION

(11) **EP 4 787 089 A1**
(43) Date of publication of application: **05.08.2026**
(21) Application number: 25155713.8
(22) Date of filing: 04.02.2025
(51) Int. Cl.: G05B 15/02

(54) **BUILDING MANAGEMENT SYSTEM, SYSTEM COMPRISING BUILDING MANAGEMENT SYSTEM AND ELECTRICAL DEVICE USABLE BY A PERSON AND METHOD FOR CONTROLLING A BUILDING INFRASTRUCTURE DEVICE**

(71) Applicant: Tridonic GmbH & Co. KG, 6851 Dornbirn (AT)
(72) Inventor: Bakk, Istvan, 6851 Dornbirn (AT)
(74) Representative: Rupp, Christian

(57) **Abstract**

The present invention provides a building management system (1) configured to receive wireless signals (5), optionally radio signals, transmitted by an electrical device (3) usable by a person (4), the wireless signals (5) comprising an identifier (ID) identifying the electrical device (3); recognize the electrical device (3) on the basis of the identifier (ID) in the received wireless signals (5); determine a distance (d) between a location of a building infrastructure device (2) of the building management system (i) and a location of the recognized electrical device (3) using the received wireless signals (5); determine on the basis of the determined distance (d) whether a condition for controlling the building infrastructure device (2) according to statistical control data associated with the recognized electrical device (3) is fulfilled; and control the building infrastructure device (2) according to the statistical control data in case that the condition is fulfilled.

## Description

The present invention relates to a building management system, a system comprising a building management system and an electrical device usable by a person, and a method for controlling a building infrastructure device of a building management system.

A building managements system being installed in an indoor area, such as a room or a whole building, allows setting different environmental parameters in the indoor area, such as temperature, lighting, level of sunlight entering the room, humidity, sound etc. For this the building management system may comprise different types of building infrastructure devices, such as luminaires, heating and/or cooling equipment (e.g. air conditioners, heaters etc.), motors for blinds, motors for opening and closing windows, doors etc., humidifier equipment, sterilizing devices, information providing equipment (e.g. loud speaker(s), screen(s) etc.) etc.

Nowadays it is common to have flexible open office/hot-desking schemes in offices, which means that persons don't have a fixed working desk but may chose every day a different one. Therefore, it is desirable to have at a given working space, i.e. working desk, in the office at a given time environmental parameters being set according to preferences of the person working at said working space at the given time. This is not limited to office scenarios and, thus, is applicable to any other types of indoor areas, such a school building, school rooms, university building, lecture halls, libraries etc., where at a certain location in the indoor area a control of building infrastructure device(s) according to preferences of a person is desired. For privacy reasons it is preferred to have such personalized setting of environmental parameters at a given indoor location, such as the working space, without needing to identify the respective person.

Therefore, it is an object of the present invention to provide a building management system that allows achieving the above described setting of one or more environmental settings without needing to identify persons. It is in particular an object of the present invention to provide a building management system that allows setting at least one environmental parameter to a preference of a person without needing to identify the person.

These and other objects, which become apparent upon reading the following description, are solved by the subject-matter of the independent claim. The dependent claims refer to preferred embodiments of the invention.

According to a first aspect of the invention, a building management system is provided. The building management system is configured to receive wireless signals transmitted by an electrical device usable by a person, wherein the wireless signals comprise an identifier identifying the electrical device. Optionally, the wireless signals are radio signals. The building management system is configured to recognize the electrical device on the basis of the identifier in the received wireless signals. The building management system is configured to determine a distance between a location of a building infrastructure device of the building management system and a location of the recognized electrical device using the received wireless signals. The building management system is configured to determine on the basis of the determined distance whether a condition for controlling the building infrastructure device according to statistical control data associated with the recognized electrical device is fulfilled. The building management system is configured to control the building infrastructure device according to the statistical control data in case that the condition is fulfilled.

In other words, the invention proposes controlling operation of a building infrastructure device and, thus, an environmental parameter being controllable or changeable by said building infrastructure device according to statistical control data associated with an recognized electrical device in case it is determined on the basis of the distance between the location of the building infrastructure device and the recognized electrical device that a condition for such a control is fulfilled. Since the electrical device is usable by a person, the control of the building infrastructure device according to the statistical control data associated with the electrical device represents a control according to statistical control data matching preferences of the person for controlling the building infrastructure device. The electrical device is recognized based on an identifier identifying the electrical device that is comprised in wireless signals transmitted by the electrical device, wherein the wireless signals are additionally used for determining the distance between the location of the recognized electrical device and the location of the building infrastructure device. Since the electrical device is recognized and the statistical control data are associated with the electrical device, the building management system does not determine the identity of the person that uses the electrical device. Thus, the building management system allows controlling the building infrastructure device and, thus, an environmental parameter controllable or changeable by the building infrastructure device according to preferences of the person, namely the statistical control data associated with the electrical device of the person, without actually identifying the person. Therefore, the building management system allows setting at least one environmental parameter to a preference of a person without needing to identify the person.

The electrical device may be a portable electrical device. The electrical device may be an electrical device operable by the person. The electrical device may be one of a computer keyboard, computer mouse, tablet, laptop, notebook, mobile phone, smartphone etc.

The building infrastructure device may be a luminaire, a heating and/or cooling equipment (e.g. air conditioner and/or heater), a motor for blinds, a motor for opening and closing window(s), door(s) etc., a humidifier equipment, a sterilizing device, information providing equipment (e.g. loud speaker(s), screen(s) etc.) etc. The type of environmental parameter controllable or changeable by a respective building infrastructure device depends on the type of building infrastructure device. For example, a luminaire may change lighting, heating and/or cooling equipment may change temperature, a motor for blinds may change an amount of sun light entering through a window, on which the blinds are installed, and so on.

Controlling the building infrastructure device may comprise turning the building infrastructure device on or off and controlling operation of the device.

The statistical control data associated with the recognized electrical device are statistical control data for controlling the building infrastructure device that are associated, i.e. linked, to the recognized electrical device. That is, in case a different electrical device is recognized different statistical data, which are associated to said different recognized electrical device, are used for controlling the building infrastructure device in case the condition for such control is fulfilled.

The statistical control data may be stored in a data storage, wherein the building management system is configured to access said data storage, e.g. read from and optionally write to the data storage. The data storage may be part of the building management system.

Optionally, the building management system is configured to determine the distance between the location of the building infrastructure device and the location of the recognized electrical device using a signal intensity and/or a run-time of the received wireless signals.

The terms "signal strength" and "amplitude of the signal" may be used as synonyms for the term "signal intensity". The building management system may be configured to determine the distance using a parameter of the received wireless signals. For example, the building management system may be configured to determine the distance using the received signal strength indicator (RSSI) of the received wireless signals. In addition or alternatively, the building management system may be configured to determine the distance using the run-time of the received wireless signals, i.e. a time between transmission of the wireless signals by the electrical device and receival of the wireless signals by the building management system.

The present invention is not limited to a specific method of determining the distance using the received wireless signals, e.g. the signal intensity and/or run-time of the signals, and, thus, any method know in the art may be used for that.

Optionally, the building management system is configured to receive the wireless signals in the form of at least one of Bluetooth signals, ultra-wideband communication (UWB) signals, and Wi-Fi signals. That is, the wireless signals may be at least one of Bluetooth signals, UWB signals and Wi-Fi signals. The term "wireless local area network (WLAN) signals" may be used as a synonym for the Wi-Fi signals.

Optionally, the building management system is configured to receive the wireless signals in the form of pulse-based radio communication (PBRC) signals. That is, the wireless signals may be PBRC signals.

The building management system may be configured to not consider the recognized electrical device for controlling the building infrastructure device in case data, optionally statistical data, indicate that the building management system receives the wireless signals during a time greater than a time threshold.

This allows ignoring electrical devices, which transmit wireless signals comprising the identifier identifying them and which are not typically carried by a person or even permanently installed in an area, in which the building management system is installed, and thus should not be considered for controlling the building infrastructure device. For example, assuming the building management system is installed in an office and the building infrastructure device is a luminaire at a working desk of the office, the lighting provided by the luminaire is to be controlled according to statistical control data associated to a recognized electrical device usable by the person working at said working desk, wherein the lighting should not be controlled as a result of recognizing a wireless local area network (WLAN) router installed in the office. That is, the WLAN router is an example of an electrical device usable by the person and being permanently installed in the office and, thus, permanently transmitting wireless signals comprising the identifier for identifying the WLAN router. This may be avoided by setting the time threshold accordingly.

The time threshold may be greater or equal to a set use time that is set for an area, in which the building management system is installed.

For example, in case the building management system is installed in an office, then the set use time may be set to be the daily office hours.

Optionally, the building management system is configured to not consider the recognized electrical device for the control of the building infrastructure device in case the building management system stops receiving the wireless signals after a time smaller than a second time threshold, the second time threshold being smaller or equal to a time, during which a change of a control of the building infrastructure device is not desired. The second time threshold is smaller than the time threshold.

For example, assuming that the building management system is installed in an office and the building infrastructure device is a luminaire at a working desk of the office, the lighting provided by the luminaire is to be controlled according to statistical control data associated to a recognized electrical device usable by the person working at said working desk, wherein the lighting should not be controlled as a result of a second person shortly being present at the working desk, e.g. due to passing by or having a chat with the person. This may be avoided by setting the second time threshold accordingly.

Optionally, the building management system is configured to not consider a further recognized electrical device for controlling the building infrastructure device in case the building management system has already determined that for the recognized electrical device the condition is fulfilled.

For example, assuming that the building management system is installed in an office and the building infrastructure device is a luminaire at a working desk of the office, the lighting provided by the luminaire is to be controlled according to statistical control data associated to a recognized electrical device usable by the person working at said working desk, wherein the lighting should not be controlled as a result of a second person shortly being present at the working desk, e.g. due to passing by or having a chat with the person. This may be avoided by ignoring for controlling the luminaire an electrical device used by the second person after the building management system has already determined that for an recognized electrical device of the person working at the working desk the condition for controlling the luminaire is fulfilled.

Optionally, the building management system is configured to determine priorities for the recognized electrical device and one or more further recognized electrical devices with regard to controlling the building infrastructure device. The building management system may be configured to increase a priority of the recognized electrical device in case historical data indicate that the recognized electrical device has been located multiple times within a set range around the building infrastructure device, the set range being set for controlling the building infrastructure device.

Optionally, the greater the number of times the recognized electrical device has been located within the set range around the building infrastructure device, the greater the priority of the recognized electrical device.

Optionally, the building management system is configured to determine that the condition is fulfilled in case the recognized electrical device is located within a set range around the building infrastructure device, the set range being set for controlling the building infrastructure device; in case one or more further electrical devices are recognized by the building management system, wherein the recognized electrical device and the recognized one or more further electrical devices are part of a group, and each of the recognized electrical device and the recognized one or more further electrical devices are located within the set range around the location of the building infrastructure device; or in case the recognized electrical device has a greatest priority among multiple recognized electrical devices with regard to the control of the building infrastructure device.

A group of electrical devices may comprise electrical devices usable by a single person. A group of electrical devices may comprise electrical devices of different persons that are associated with each other. For example, the electrical devices of persons that are determined to work together or take part at a meeting in a meeting room may be part of a group. The statistical control data associated to the recognized electrical device may comprise statistical control data for controlling the building infrastructure device and additionally different statistical control data for controlling the building infrastructure device when the recognized electrical device is part of a group. Optionally, depending on the type of group, the statistical control data associated to the recognized electrical device for controlling the building infrastructure device may be the same or different in case the recognized electrical device is part of a group or not.

For example, when the group comprises electrical devices usable by the same person then the recognized electrical device being part of said group does not result in different statistical control data compared to the case where the recognized electrical device is not part of said group. For example, when the group comprises electrical devices usable by different persons then it may be desirable to control the building infrastructure device according to statistical control data that is desired for the group of different persons. In this case, the statistical control data associated with the recognized electrical device being part of the group may be different compared to the statistical control data associated with the recognized electrical device not being part of the group.

Optionally, the building management system is configured to adapt the statistical control data associated with the recognized electrical device according to historical data of operation parameters of the building infrastructure device being set when the recognized electrical device is located within a set range around the building infrastructure device, the set range being set for controlling the building infrastructure device.

This allows adapting the statistical control data to an actual control of the building infrastructure device by a person using the recognized electrical device during a time when the recognized electrical device is located within the set range around the building infrastructure device. For example, the building infrastructure device is assumed to be a luminaire and the current statistical control data associated with the recognized electrical device are assumed to indicate controlling the luminaire with a dim level of 80% (i.e. 80 % light intensity is to be emitted) because a person using the electrical device uses the area in which the building infrastructure device is installed for working. For example, the person may decide to use the aforementioned area for a different purpose, e.g. for relaxing, where he prefers to relax and, thus, changes at multiple consecutive days the dim level of 80 % (being set due to the electrical device being recognized and fulfilling the control condition and, thus, the luminaire being controlled according to the aforementioned statistical control data) to 50 %. Then the building management system allows to consider this changed preference of the person as the building management system may adapt the statistical control data associated with the recognized electrical device according to historical data of operating the luminaire several times at 50 %, i.e. to operation parameters of the luminaire being set, when the recognized electrical device is located within the set range around the luminaire.

Optionally, the building management system stores historical data on at least one of one or more recognized electrical devices, priorities of the one or more recognized electrical devices with regard to controlling one or more building infrastructure devices of the building management system, distance(s) of the one or more recognized electrical devices with regard to a location of the one or more building infrastructure devices of the building management system, information on one or more groups of two or more electrical devices of multiple recognized electrical devices, statistical control data associated with the one or more recognized electrical devices, and operation parameters of the one or more building infrastructure devices.

The building management system may be configured to store the historical data in the above mentioned data storage. The historical data are linked to time data, such as date and optionally time of a day.

Optionally, the building management system is the building infrastructure device.

In other words, the building management system may be a single building infrastructure device. In this case the above description with regard to the building management system is valid for the building infrastructure device. The above mentioned data storage may be part of the building infrastructure device.

Optionally, the building management system comprises multiple building infrastructure devices and the building infrastructure device is one of the multiple building infrastructure devices, wherein the building infrastructure device is configured to receive the wireless signals transmitted by the electrical device. A control unit of the building infrastructure device and/or a central control unit of the building management system may be configured to perform one or more of the further method steps for which the building management system is configured for.

The above mentioned data storage may be part of one of the building infrastructure devices of the building management system or the central control unit of the building management system. The control unit of the building infrastructure device may be or comprise at least one of a processor, microprocessor, controller, microcontroller, field programmable gate array (FPGA), application specific integrated circuit (ASIC) and any other control unit(s) known in the art. The same is valid for the central control unit of the building management system.

Optionally, the control unit of the building infrastructure device is configured to recognize the electrical device, and determine the distance between the location of the building infrastructure device and the location of the recognized electrical device. Optionally, the central control unit of the building management system is configured to determine whether the condition is fulfilled, and control the building infrastructure device according to the statistical control data in case that the condition is fulfilled.

Optionally, the central control unit of the building management system is configured to recognize the electrical device, determine the distance between the location of the building infrastructure device and the location of the recognized electrical device, determine whether the condition is fulfilled, and control the building infrastructure device according to the statistical control data in case that the condition is fulfilled.

In order to achieve the building management system according to the first aspect of the present invention, some or all of the above described optional features may be combined with each other.

According to a second aspect of the invention, a system is provided. The system comprises a building management system, and an electrical device usable by a person. The electrical device is configured to transmit wireless signals, wherein the wireless signals comprise an identifier identifying the electrical device. Optionally, the wireless signals are radio signals. The building management system is configured to receive the transmitted wireless signals. The building management system is configured to recognize the electrical device on the basis of the identifier in the received wireless signals. The building management system is configured to determine a distance between a location of a building infrastructure device of the building management system and a location of the recognized electrical device using the received wireless signals. The building management system is configured to determine on the basis of the determined distance whether a condition for controlling the building infrastructure device according to statistical control data associated with the recognized electrical device is fulfilled. The building management system is configured to control the building infrastructure device according to the statistical control data in case that the condition is fulfilled.

In other words, the system of the second aspect of the invention comprises the building management system of the first aspect of the invention and an electrical device usable by a person, wherein the electrical device is configured to transmit wireless signals, optionally radio signals, comprising an identifier identifying the electrical device.

Optionally, the electrical device is configured to transmit the wireless signals in the form of at least one of Bluetooth signals, ultra-wideband communication (UWB) signals, and Wi-Fi signals. That is, the wireless signals may be at least one of Bluetooth signals, UWB signals and Wi-Fi signals. Optionally, the electrical device is configured to transmit the wireless signals in the form of pulse-based radio communication (PBRC) signals. That is, the wireless signals may be PBRC signals.

The above description with regard to the building management system of the first aspect of the present invention is also valid for the system of the second aspect of the invention.

In order to achieve the system according to the second aspect of the present invention, some or all of the above described optional features may be combined with each other.

According to a third aspect of the invention, a method for controlling a building infrastructure device of a building management system is provided. The method comprises receiving, by the building infrastructure device, wireless signals, transmitted by an electrical device usable by a person, the wireless signals comprising an identifier identifying the electrical device. The wireless signals are optionally radio signals. The method comprises recognizing the electrical device on the basis of the identifier in the received wireless signals. The method comprises determining a distance between a location of the building infrastructure device of the building management system and a location of the recognized electrical device using the received wireless signals. The method comprises determining on the basis of the determined distance whether a condition for controlling the building infrastructure device according to statistical control data associated with the recognized electrical device is fulfilled. The method comprises controlling the building infrastructure device according to the statistical control data in case that the condition is fulfilled.

The above description with regard to the building management system of the first aspect of the present invention is also valid for the method of the third aspect of the invention.

In order to achieve the method according to the third aspect of the present invention, some or all of the above described optional features may be combined with each other.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures (FIGs.), in which
- **FIG. 1**: shows an example of a building management system according to the present invention and an example of a system according to the present invention comprising said building management system and an electrical device usable by a person;
- **FIG. 2**: shows an example of a method according to the present invention for controlling a building infrastructure device of a building management system;
- **FIG. 3**: shows an example of an implementation form of the building management system and system of FIG. 1;
- **FIG. 4**: shows an example of an implementation form of the building management system and system of FIG. 1;
- **FIG. 5**: shows an example of an implementation form of the building management system and system of FIG. 4; and
- **FIG. 6**: shows an example of statistical control data usable in the building management system of FIGs. 1 and 3 to 5.

In the FIGs., corresponding elements have the same reference signs. The size of elements in the FIGs. is not to scale and may be different compared to a real life implementation in order to highlight details of the embodiments.

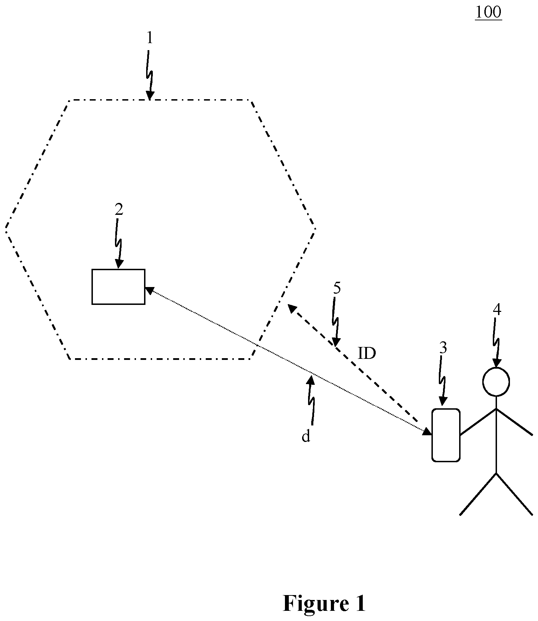

**FIG. 1** shows an example of a building management system according to the present invention and an example of a system according to the present invention comprising said building management system and an electrical device usable by a person. The building management system of FIG. 1 is an example of the building management system according to the first aspect of the invention. Thus, the description of the building management system according to the first aspect of the invention is correspondingly valid for the building management system of FIG. 1. The system of FIG. 1 comprising the building management system of FIG. 1 is an example of the system according to the second aspect of the invention. Thus, the description of the system according to the second aspect of the invention is correspondingly valid for the system of FIG. 1 comprising the building management system of FIG. 1.

The building management system 1 of FIG. 1 is configured to receive wireless signals 5 transmitted by an electrical device 3 usable by a person 4. The electrical device 3 may be operable by the person 4. The electrical device 3 may be a portable device and, thus, may be carried by the person 4. For example, the electrical device may be one of a computer keyboard, computer mouse, tablet, laptop, notebook, mobile phone, smartphone etc. In the example of FIG. 1, the electrical device 3 is exemplarily a smartphone. This is only by way of example and, thus, the electrical device 3 may be different and the following description is respectively valid irrespective of the type of electrical device.

As shown in FIG. 1, the wireless signals 5 transmitted by the electrical device 3 comprise an identifier ID identifying the electrical device 3. The identifier ID may be or comprise for example an address (e.g. MAC address), universally unique identifier (UUID), manufacturer number etc. of the electrical device 3. The identifier ID of the electrical device 3 may be changed, e.g. by the person 4. The identifier ID is unique for the electrical device 3 and, thus, allows identifying the electrical device 3. The wireless signals 5 transmitted by the electrical device 3 may be radio signals. Optionally, the wireless signals may be PBRC signals. For example, the wireless signals may be at least one of Bluetooth signals, UWB signals and Wi-Fi signals.

The building management system 1 is configured to recognize the electrical device 3 on the basis of the identifier ID in the received wireless signals 5. In other words, at a certain building infrastructure device 2 of the building management system 1 presence of a specific person 4 may be detected by detecting an identifier ID of electrical devices, such as the electrical device 3 shown in FIG. 1, being used or carried by the person 4. That is, each electrical device of the person 4 wirelessly transmits signals 5 of a wireless communication, which are received by the building management system 1, wherein a unique identifier ID identifying the respective electrical device is being transmitted in the wireless signals 5. The identifier ID (i.e. unique identifier) of an electrical device, such as the electrical device 3 of FIG. 1, may be referred to as "digital fingerprint of the electrical device". Based on this unique identifier ID, the building management system 1 may distinguish the different electrical devices and thus may recognize the different electrical devices. The transmission of the aforementioned unique identifier ID represents the digital fingerprint of the respective electrical device.

As shown in FIG. 1, the building management system 1 is configured to determine a distance d between a location of a building infrastructure device 2 of the building management system 1 and a location of the recognized electrical device 3 using the received wireless signals 5. For this, the building management system may be configured to determine the distance d between the location of the building infrastructure device 2 and the location of the recognized electrical device 3 using a signal intensity and/or a run-time of the received wireless signals 5. Methods for determining the distance d comprise using one of the received signals strength indicator (RSSI), time of flight (TOF), TOF and phase, and triangulation. The present invention is not limited to a specific method of determining the distance d using the received wireless signals 5, e.g. the signal intensity and/or run-time of the signals, and, thus, any method know in the art may be used for that.

The building management system 1 is configured to determine on the basis of the determined distance d whether a condition for controlling the building infrastructure device 2 according to statistical control data associated with the recognized electrical device 2 is fulfilled. The building management system 1 is configured to control the building infrastructure device according to the statistical control data in case that the condition is fulfilled.

The building management system 1 recognizing the electrical device 3 on the basis of the identifier ID in the wireless signals 5 transmitted by the electrical device 3 may either mean that the building management system 1 detects the identifier ID or that the building management system 1 detects a presence of the electrical device 3 based on detecting the identifier ID in the received wireless signals 5. For the aforementioned second alternative, the building management system 1 may have access to a data base, e.g. a look-up table, that maps different identifiers ID of different electrical devices to the respective electrical device of the different electrical devices. In the aforementioned first alternative, the statistical control data associated with the recognized electrical device 3 are statistical control data that are associated with the identifier ID of the recognized electrical device 3. For example, the statistical control data associated with the recognized electrical device 3 may be stored in a look-up table together (i.e. in association) with the identifier ID of the recognized electrical device 3. In the aforementioned second alternative, for example, the statistical control data associated with the recognized electrical device 3 may be stored in a look-up table together (i.e. in association) with the recognized electrical device 3.

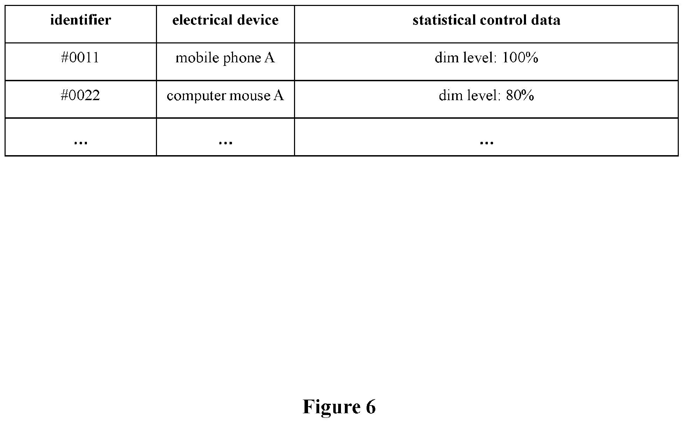

**FIG. 6** shows an example of statistical control data usable in the building management system 1 of FIG 1. In the example of FIG. 6 it is exemplarily assumed that the building infrastructure device 2 is a luminaire and the statistical control data comprise the dim level between 0 % and 100 %. The greater the dim level the more light is emitted and vice versa. As shown in FIG. 6, different devices, such as a "mobile phone A" and "computer mouse A", transmit wireless signals 5 having different identifiers ID, such as "#0011" and "#0022", respectively. Thus, the identifier ID allows recognizing the respective electrical device. The statistical control data associated with the identifier "#0011" identifying the mobile phone A and, thus, associated with the mobile phone A may comprise a dim level of 100 %, whereas the statistical control data associated with the identifier "#0022" identifying the computer mouse A and, thus, associated with the computer mouse A may comprise a dim level of 80 %. Therefore, for example, when the building management system 1 receives wireless signals 5 comprising the identifier "#0022", the system 1 may recognize the computer mouse A and, thus, control the luminaire with a dim level of 80 % in case the condition for such a control is fulfilled. The statistical control data may optionally be associated with other data and metadata, such as time of the day, so that multiple operating parameters setting for controlling the respective building infrastructure device can be associated with the recognized electrical device and, thus, the person using said electrical device. For example, with regard to a recognized electrical device, there may be statistical control data used during the day and statistical control data used during the night for controlling the respective building infrastructure device.

The building infrastructure device 2 of the building management system 1 of FIG. 1 may be a luminaire, a heating and/or cooling equipment (e.g. air conditioner and/or heater), a motor for blinds, a motor for opening and closing window(s), door(s) etc., a humidifier equipment, a sterilizing device, information providing equipment (e.g. loud speaker(s), screen(s) etc.) etc. The present invention is not limited to a specific type of luminaire and, thus, any known type of luminaire may be used. In FIG. 1, only one building infrastructure device 2 is shown. This is only by way of example. The building management system 1 may comprise multiple building infrastructure devices. Optionally, at least two of such multiple building infrastructure devices may be of a different type. In FIG. 1, only one electrical device 3 usable by a person 4 is shown. This is only by way of example. That is, in the area in which the building management system 1 is installed, multiple electrical devices may be present, wherein at least two of the multiple electrical devices may be of a different type. At least two of the multiple electrical devices may be used by at least two different persons. Optionally, two or more of the multiple electrical devices are used by a single person, e.g. the person 4 shown in FIG. 1. The description with regard to the building infrastructure device 2 shown in FIG. 1 and the electrical device 3 shown in FIG. 1 being present in the area, in which the building management system 1 is installed, especially the description of controlling the building infrastructure device 2 shown in FIG. 1 with regard to the electrical device 3 shown in FIG. 1, may be correspondingly valid for the multiple building infrastructure devices of the building management system 1 and the multiple electrical devices. Each of the multiple electrical devices is configured to transmit the identifier ID that identifies the respective electrical device of the multiple electrical devices. That is, each electrical device of the multiple electrical devices transmits wireless signals 5 comprising a different identifier ID compared to the identifiers ID of the wireless signals 5 transmitted by the other electrical device(s) of the multiple electrical devices.

The building management system 1 of FIG. 1 allows controlling the building infrastructure device 2 according to preferences of the person 4 by being configured to control the building infrastructure device 2 according to statistical control data associated with the recognized electrical device 3 usable by the person 4 in case the condition for such a control is fulfilled. Since for this control not the person 4 but the electrical device 3 is recognized by the building management system 1 based on the identifier ID in the wireless signals 5 transmitted by the electrical device 3, the person 4 is not identified and, thus, the privacy of the person 4 is respected. There may be different scenarios, in which the building management system 1 of FIG. 1 determines, based on the distance d between the location of the building infrastructure device 2 and the location of the electrical device 2, that the condition for controlling the building infrastructure device 2 according to the statistical control data associated with the recognized electrical device 3 is fulfilled.

For example, the building management system 1 may be configured to determine that the condition is fulfilled in case the recognized electrical device 3 is located within a set range around the building infrastructure device 1, the set range being set for controlling the building infrastructure device 2. Since the building management system 1 determines the distance d between the location of the building infrastructure device 2 and the location of the electrical device 3 it can determine whether the electrical device 3 is located within the set range around the building infrastructure device 1 or not. The set range may correspond to an area encompassing the location of the building infrastructure device, with dimensions that are set for controlling the building infrastructure device 2. Optionally, the set range may be a circle area with the location of the building infrastructure device 2 located at the midpoint of the circle area, wherein the radius of the circle area is set for controlling the building infrastructure device 2. For example, assuming the building management system 1 is installed in an office and the building infrastructure device 2 is installed for controlling an environmental parameter at a certain working space, e.g. working desk or a room, of the office, then the set range may correspond to the area of the working space. Thus, as soon as the electrical device 3 (e.g. being a smartphone) is located within said workspace due to the person 4 moving within said workspace, the electrical device 3 is located within the set range around the building infrastructure device 3 and, thus, the condition is fulfilled.

Optionally, the building management system 1 may be configured to determine that the condition is fulfilled in case one or more further electrical devices (not shown in FIG. 1) are recognized by the building management system 1, wherein the recognized electrical device 3 and the recognized one or more further electrical devices are part of a group, and each of the recognized electrical device 3 and the recognized one or more further electrical devices are located within the set range around the location of the building infrastructure device. The above description with regard to the set range is correspondingly valid. For example assuming the building management system 1 is installed in an office and the building infrastructure device 2 is installed for controlling an environmental parameter at a certain working space, e.g. working desk or a room, of the office, then it may be possible that two or more persons carrying a respective electrical device transmitting wireless signals 5 with a respective identifier ID may be located in the set range. A first person of the persons may be located in the set range as it has chosen the working space for working, whereas the other one or more person may be present in the working space for shortly talking with the aforementioned first person that chose the working space for working. Thus, the other one or more persons probably will each carry only a single electrical device in the form of e.g. a mobile phone (e.g. smartphone), whereas the first person may use in addition to its mobile phone (e.g. smart phone) a personal computer mouse, a personal key board and a personal laptop. These three items are examples of one or more further electrical devices that may form with the electrical device being a mobile phone a group of devices, wherein the group of devices are the devices usable by a single person, i.e. the aforementioned first person. Therefore, when determining that two or more recognized electrical devices being located within the set range belong to a group (e.g. they all are used by the same person), then this may indicate that the control should be according to preferences of the person being associated with said group so that the condition is being regarded as being fulfilled. Thus, even when the distance from the building infrastructure device 2 to the electrical device of one of the other persons is smallest among all the distance to the building infrastructure device 2 of the other electrical devices, the building management system 1 may determine that the condition is fulfilled for the electrical device 3 of the first person 4 as said electrical device 3 is present together with three other electrical devices 3 (computer mouse, computer keyboard, laptop) of the first person 4 in the set range. Thus, the building management system 1 recognizes the electrical device 3 of the person 4 and the three further electrical devices of the person 4, wherein they are part of a group (namely the group of devices used by or belonging to the first person 4), and each of them is located within the set range around the location of the building infrastructure device 2.

Optionally, the building management system 1 may be configured to determine that the condition is fulfilled in case the recognized electrical device 3 has a greatest priority among multiple recognized electrical devices with regard to the control of the building infrastructure device 2. For example, the building management system 1 is configured to determine priorities for the recognized electrical device 3 and one or more further recognized electrical devices (not shown in FIG. 1) with regard to controlling the building infrastructure device 2. The building management system 1 may be configured to increase a priority of the recognized electrical device 3 in case historical data indicate that the recognized electrical device has been located multiple times within a set range around the building infrastructure device 2, the set range being set for controlling the building infrastructure device. The above description with regard to the set range is correspondingly valid.

Optionally, there may be cases, where it is desirable that the building management system 1 does not consider an electrical device, especially the statistical control data associated with the electrical device, for controlling the building infrastructure device 2.

For example, the building management system may be configured to not consider a recognized electrical device for controlling the building infrastructure device 2 in case data, optionally statistical data, indicate that the building management system 1 receives the wireless signals during a time greater than a time threshold. This allows ignoring electrical devices being permanently located within the area, in which the building management system 2 is installed. Since electrical devices being permanently located within the area, such a WLAN router, do not represent a person, they should not be considered for controlling the building infrastructure device 2. In other words, wireless signals received from electrical devices permanently installed in the area do not represent wireless signals 5 transmitted from an electrical device, such as the device 3 of FIG. 1, of a person 4 and, thus, are to be ignored. The time threshold may be greater or equal to a set use time that is set for an area, in which the building management system is installed. For example, in case the building management system is installed in an office, then the set use time may be set to be the daily opening time of the office. For example, the time threshold may be a day, e.g. 24 hours.

Optionally, the building management system 1 may be configured to not consider a recognized electrical device for the control of the building infrastructure device 2 in case the building management system 1 stops receiving the wireless signals after a time smaller than a second time threshold, the second time threshold being smaller or equal to a time, during which a change of a control of the building infrastructure device is not desired. The second time threshold is smaller than the time threshold.

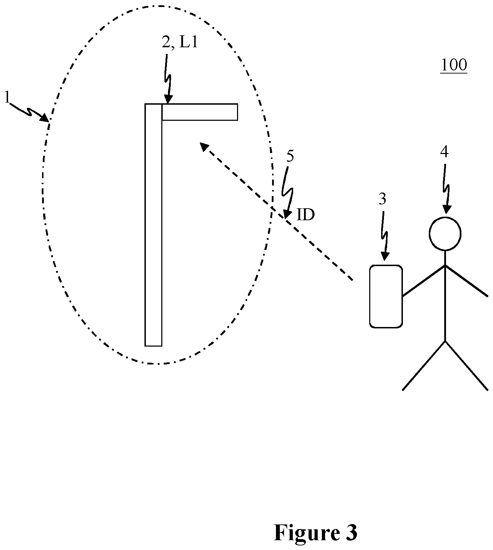

Optionally, the building management system 1 may be configured to not consider a further recognized electrical device for controlling the building infrastructure device 2 in case the building management system 1 has already determined that for the recognized electrical device 3 the condition is fulfilled. For example, in case the building management system 1 has already determined that the condition is fulfilled for the recognized electrical device 3 of the person 4 shown in Figure 3, then the building management system 1 should not consider a further recognized electrical device (not shown in FIG. 1) for controlling the building infrastructure device 2. The further recognized electrical device may be for example carried by another person that visits the person 4 so that the control according to statistical control data associated with the electrical device 3 of the person 4 and, thus, according to preferences of the person 4 should not be changed by recognizing the further electrical device of the other person.

The building management system 1 may be configured to adapt the statistical control data associated with the recognized electrical device 3 according to historical data of operation parameters of the building infrastructure device 2 being set when the recognized electrical device 3 is located within a set range around the building infrastructure device 2, the set range being set for controlling the building infrastructure device. The above description of the set range is correspondingly valid.

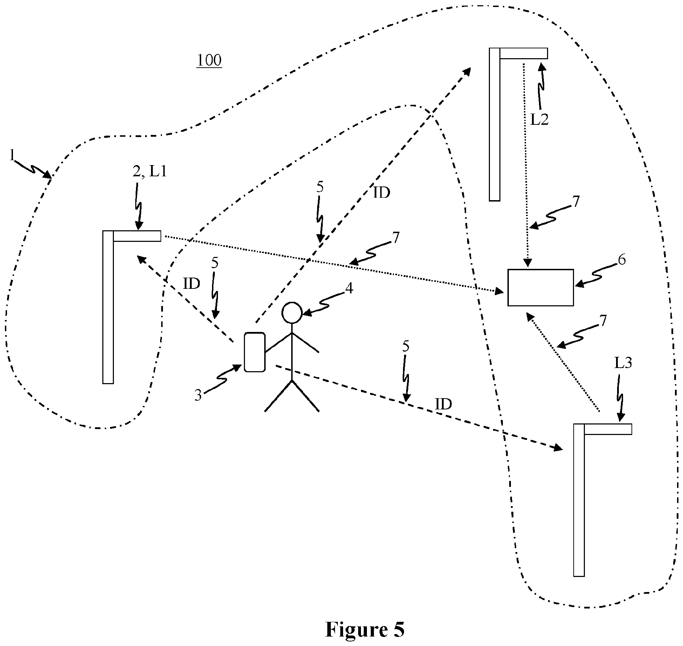

That is, the statically control data associated with the recognized electrical device 3 and, thus, representing operation parameters for operating the building infrastructure device 2 that are preferred by the person 4 may be gathered over time. For example, after installation of the building management system 1 the operation parameters of the building infrastructure device 2 may be set to default values and with a time, due to the different settings of the persons and their preferences, the building management system 1 may learn preferred settings of the operation parameters of the building infrastructure device 2, which are automatically associated to respective identifiers ID of electrical devices, such as the electrical device 3 shown in FIG. 5, carried or used by the person 4, which are detected during the time when the person 4 sets the preferred settings at the building infrastructure device 2.

For example, when the building infrastructure device 2 is a luminaire then the operation parameters may be lighting settings, such as dim level, melanopic level, UV-B maximum intensity, color temperature (CCT), color, a light pattern, a light scene etc.

The building management system 1 may be configured to store historical data on at least one of: one or more recognized electrical devices, priorities of the one or more recognized electrical devices with regard to controlling one or more building infrastructure devices of the building management system, distance(s) of the one or more recognized electrical devices with regard to a location of the one or more building infrastructure devices of the building management system, information on one or more groups of two or more electrical devices of multiple recognized electrical devices, statistical control data associated with the one or more recognized electrical devices, and operation parameters of the one or more building infrastructure devices.

Optionally, the building management system 1 may be a lighting system. In this case, the building infrastructure device 2 and optional one or more further building infrastructure devices of the lighting system may be luminaire(s).

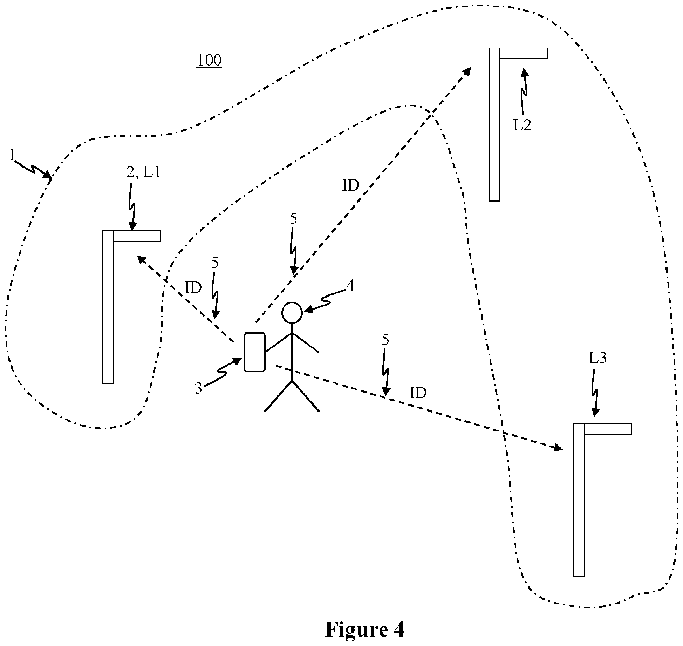

Two different implementation forms of the building management system 1 are shown in FIGs. 3 and 4. The building management system 1 and the electrical device 3 usable by the person 4 may form a system 100. This system 100 is an example of the system according to the second aspect of the present invention.

Further information on optional implementation forms of the building management system 1 of FIG. 1 are described with regard to FIGs. 3 to 5.

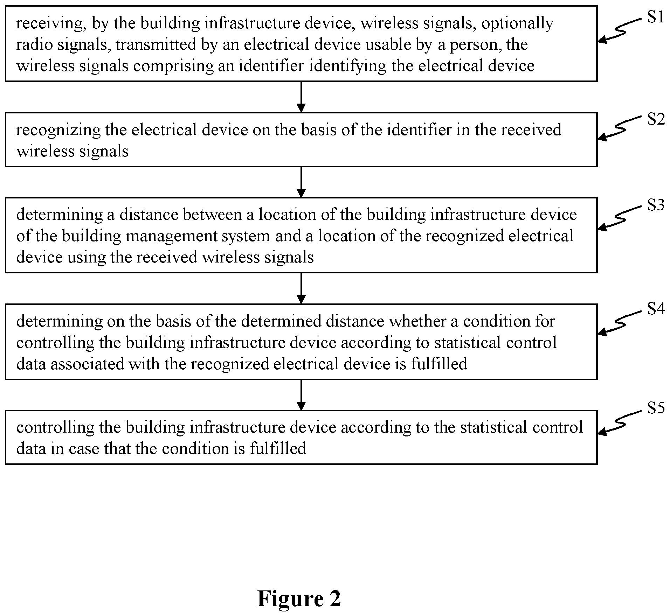

**FIG. 2** shows an example of a method according to the present invention for controlling a building infrastructure device of a building management system. The method of FIG. 2 is an example of the method according to the third aspect of the invention. Thus, the description of the method according to the third aspect of the invention is correspondingly valid for the method of FIG. 2.

The method of FIG. 2 is a method for controlling a building infrastructure device of a building management system, such as a building infrastructure device of the building management system 1 of FIG. 1. The method comprises a step S1 of receiving, by the building infrastructure device, wireless signals transmitted by an electrical device usable by a person, the wireless signals comprising an identifier identifying the electrical device. The wireless signals are optionally radio signals. The method comprises the step S2 of recognizing the electrical device on the basis of the identifier in the received wireless signals. The method comprises the step S3 of determining a distance between a location of the building infrastructure device of the building management system and a location of the recognized electrical device using the received wireless signals. The method comprises a step S4 of determining on the basis of the determined distance whether a condition for controlling the building infrastructure device according to statistical control data associated with the recognized electrical device is fulfilled. The method comprises the step S5 controlling the building infrastructure device according to the statistical control data in case that the condition is fulfilled.

The building management system 1 of FIG. 2 may be configured to perform the method of FIG. 2.

**FIG. 3** shows an example of an implementation form of the building management system and system of FIG. 1. According to the example of FIG. 3, the building management system 1 is the building infrastructure device 2. In the example of FIG. 3, the building infrastructure device 2 and, thus, the building management system 1 is a luminaire L1. This is only by way of example and, thus, the building infrastructure device 2 may be a different building infrastructure device type.

**FIG. 4** shows an example of an implementation form of the building management system and system of FIG. 1. According to the example of FIG. 3, the building management system 4 comprises multiple building infrastructure devices L1, L2, L3 and the building infrastructure device 2 of FIG. 1 is one of the multiple building infrastructure devices L1, L2, L3, wherein the building infrastructure device 2 is configured to receive the transmitted wireless signals 5. Two or more, optionally each, of the building infrastructure devices L1, L2, L3 may be configured to receive the wireless signals 5 transmitted by the electrical device 3, as shown in Figure 4. A control unit of the building infrastructure device 2 may be configured to perform the further method steps for which the building management system is configured for. That is, the control unit of the building infrastructure device 2 may be configured to perform the steps S2, S3, S4 and S5. In the example of FIG. 4, the building infrastructure devices L1, L2, L3 are luminaires L1, L2, L3, respectively. This is only by way of example and, thus, at least one of the building infrastructure devices L1, L2, L3 may be at least one different building infrastructure device type. The description of the building infrastructure device 2 of FIG. 1 may be valid for any one, optionally each, of the building infrastructure devices L2, L3.

**FIG. 5** shows an example of an implementation form of the building management system and system of FIG. 4. The building management system of FIG. 5 corresponds to the building management system of FIG. 4 having an optional additional feature. Thus, the description of FIG. 4 is correspondingly valid for FIG. 5 and in the following mainly differences are described.

As shown in FIG. 5, the building management system 1 may comprise a central control unit 6. The central control unit 6 may be configured to wirelessly communicate and/or communicate via wire with the multiple building infrastructure devices L1, L2, L3 of the building management system 1. This is indicated by the arrows 7. The communication may be according to any method known in the art. The control unit of the building infrastructure device 2 and/or the central control unit 6 of the building management system 1 may be configured to perform one or more of the further method steps for which the building management system 1 is configured for. That is, the control unit of the building infrastructure device 2 and/or the central control unit 6 of the building management system 1 may be configured to perform one or more of the steps S2, S3, S4 and S5 of the method of FIG. 2.

For example, the control unit of the building infrastructure device 2 may be configured to perform the steps S2 and S3 of the method of FIG. 2 and the central control unit 6 of the building management system 1 may be configured to perform the steps S4 and S5 of the method of FIG. 2. Optionally, the central control unit 6 of the building management system 1 may be configured to perform the steps S2, S3, S4 and S5 of the method of FIG. 2.

In the example of FIGs. 3, 4 and 5 three building infrastructure devices L1, L2, L3 are shown. This number of building infrastructure devices of the building management system 1 is only by way of example and may be different.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A building management system (1) configured to
- receive wireless signals (5), optionally radio signals, transmitted by an electrical device (3) usable by a person (4), the wireless signals (5) comprising an identifier (ID) identifying the electrical device (3),
- recognize the electrical device (3) on the basis of the identifier (ID) in the received wireless signals (5),
- determine a distance (d) between a location of a building infrastructure device (2) of the building management system (1) and a location of the recognized electrical device (3) using the received wireless signals (5),
- determine on the basis of the determined distance (d) whether a condition for controlling the building infrastructure device (2) according to statistical control data associated with the recognized electrical device (3) is fulfilled, and
- control the building infrastructure device (2) according to the statistical control data in case that the condition is fulfilled.

2. The building management system (1) according to claim 1, wherein
- the building management system (1) is configured to determine the distance (d) between the location of the building infrastructure device (2) and the location of the recognized electrical device (3) using a signal intensity and/or a run-time of the received wireless signals (5).

3. The building management system (1) according to claim 1 or 2, wherein
- the building management system (1) is configured to receive the wireless signals (5) in the form of at least one of Bluetooth signals, ultra-wideband communication, UWB, signals, and Wi-Fi signals.

4. The building management system (1) according to any one of the previous claims, wherein
- the building management system (1) is configured to not consider the recognized electrical device (3) for controlling the building infrastructure device (2) in case data, optionally statistical data, indicate that the building management system (1) receives the wireless signals (5) during a time greater than a time threshold.

5. The building management system (1) according to claim 4, wherein
- the time threshold is greater or equal to a set use time that is set for an area, in which the building management system (1) is installed.

6. The building management system (1) according to any one of the previous claims, wherein
- the building management system (1) is configured to not consider the recognized electrical device (3) for the control of the building infrastructure device (2) in case the building management system (1) stops receiving the wireless signals (5) after a time smaller than a second time threshold, the second time threshold being smaller or equal to a time, during which a change of a control of the building infrastructure device (2) is not desired.

7. The building management system (1) according to any one of the previous claims, wherein
- the building management system (1) is configured to not consider a further recognized electrical device for controlling the building infrastructure device (2) in case the building management system (1) has already determined that for the recognized electrical device (3) the condition is fulfilled.

8. The building management system (1) according to any one of the previous claims, wherein the building management system (1) is configured to
- determine priorities for the recognized electrical device (3) and one or more further recognized electrical devices with regard to controlling the building infrastructure device (2), and
- increase a priority of the recognized electrical device (3) in case historical data indicate that the recognized electrical device (3) has been located multiple times within a set range around the building infrastructure device (2), the set range being set for controlling the building infrastructure device (2).

9. The building management system (1) according to any one of the previous claims, wherein the building management system (1) is configured to determine that the condition is fulfilled in case
- the recognized electrical device (3) is located within a set range around the building infrastructure device (2), the set range being set for controlling the building infrastructure device (2);
- one or more further electrical devices are recognized by the building management system (1), wherein the recognized electrical device (3) and the recognized one or more further electrical devices are part of a group, and each of the recognized electrical device (3) and the recognized one or more further electrical devices are located within the set range around the location of the building infrastructure device (2); or
- the recognized electrical device (3) has a greatest priority among multiple recognized electrical devices with regard to the control of the building infrastructure device (2).

10. The building management system (1) according to any one of the previous claims, wherein the building management system (1) is configured to adapt the statistical control data associated with the recognized electrical device (3) according to historical data of operation parameters of the building infrastructure device (2) being set when the recognized electrical device (3) is located within a set range around the building infrastructure device (2), the set range being set for controlling the building infrastructure device (2).

11. The building management system (1) according to any one of the previous claims, wherein the building management system (1) stores historical data on at least one of
- one or more recognized electrical devices (3),
- priorities of the one or more recognized electrical devices (3) with regard to controlling one or more building infrastructure devices (2, L1, L2, L3) of the building management system (1),
- distance(s) (d) of the one or more recognized electrical devices (3) with regard to a location of the one or more building infrastructure devices (2, L1, L2, L3) of the building management system (1),
- information on one or more groups of two or more electrical devices of multiple recognized electrical devices (3),
- statistical control data associated with the one or more recognized electrical devices (3), and
- operation parameters of the one or more building infrastructure devices (2).

12. The building management system (1) according to any one of the previous claims, wherein
- the building management system (1) is the building infrastructure device (2, L1).

13. The building management system (1) according to any one of claims 1 to 11, wherein
- the building management system (1) comprises multiple building infrastructure devices (2, L1, L2, L3) and the building infrastructure device (2, L1) is one of the multiple building infrastructure devices (2, L1, L2, L3), wherein
- the building infrastructure device (2, L1) is configured to receive the wireless signals (5) transmitted by the electrical device (3), and
- a control unit of the building infrastructure device (2, L1) and/or a central control unit (7) of the building management system (1) are configured to perform one or more of the further method steps for which the building management system is configured for.

14. The building management system (1) according to claim 13, wherein
- the control unit of the building infrastructure device is configured to
- recognize the electrical device, and
- determine the distance between the location of the building infrastructure device and the location of the recognized electrical device, and
- the central control unit of the building management system is configured to
- determine whether the condition is fulfilled, and
- control the building infrastructure device according to the statistical control data in case that the condition is fulfilled.

15. The building management system (1) according to claim 13 or 14, wherein
- the central control unit of the building management system is configured to
- recognize the electrical device,
- determine the distance between the location of the building infrastructure device and the location of the recognized electrical device,
- determine whether the condition is fulfilled, and
- control the building infrastructure device according to the statistical control data in case that the condition is fulfilled.

16. A system (100) comprising
- a building management system (1), and
- an electrical device (3) usable by a person (4); wherein
- the electrical device (3) is configured to transmit wireless signals (5), optionally radio signals, the wireless signals (5) comprising an identifier (ID) identifying the electrical device (3),
- the building management system (1) is configured to
- receive the transmitted wireless signals (5),
- recognize the electrical device (3) on the basis of the identifier (ID) in the received wireless signals (5),
- determine a distance (d) between a location of a building infrastructure device (2) of the building management system (1) and a location of the recognized electrical device (3) using the received wireless signals (5),
- determine on the basis of the determined distance (d) whether a condition for controlling the building infrastructure device (2) according to statistical control data associated with the recognized electrical device (3) is fulfilled, and
- control the building infrastructure device (2) according to the statistical control data in case that the condition is fulfilled.

17. A method for controlling a building infrastructure device (2) of a building management system (1), wherein the method comprises
- receiving (S1), by the building infrastructure device (2), wireless signals (5), optionally radio signals, transmitted by an electrical device (3) usable by a person (4), the wireless signals (5) comprising an identifier (ID) identifying the electrical device (3),
- recognizing (S2) the electrical device (3) on the basis of the identifier (ID) in the received wireless signals (5),
- determining (S3) a distance (d) between a location of the building infrastructure device (2) of the building management system (1) and a location of the recognized electrical device (3) using the received wireless signals (5),
- determining (S4) on the basis of the determined distance (d) whether a condition for controlling the building infrastructure device (2) according to statistical control data associated with the recognized electrical device (3) is fulfilled, and
- controlling (S5) the building infrastructure device (2) according to the statistical control data in case that the condition is fulfilled.

## Amended claims

### Amended claims in accordance with Rule 137(2) EPC.

1. A building management system (1) configured to
- receive wireless signals (5), optionally radio signals, transmitted by an electrical device (3) usable by a person (4), the wireless signals (5) comprising an identifier (ID) identifying the electrical device (3),
- recognize the electrical device (3) on the basis of the identifier (ID) in the received wireless signals (5),
**characterized in that**
- determine a distance (d) between a location of a building infrastructure device (2) of the building management system (1) and a location of the recognized electrical device (3) using the received wireless signals (5),
- determine on the basis of the determined distance (d) whether a condition for controlling the building infrastructure device (2) according to statistical control data associated with the recognized electrical device (3) is fulfilled, and
- control the building infrastructure device (2) according to the statistical control data in case that the condition is fulfilled.

2. The building management system (1) according to claim 1, wherein
- the building management system (1) is configured to determine the distance (d) between the location of the building infrastructure device (2) and the location of the recognized electrical device (3) using a signal intensity and/or a run-time of the received wireless signals (5).

3. The building management system (1) according to claim 1 or 2, wherein
- the building management system (1) is configured to receive the wireless signals (5) in the form of at least one of Bluetooth signals, ultra-wideband communication, UWB, signals, and Wi-Fi signals.

4. The building management system (1) according to any one of the previous claims, wherein
- the building management system (1) is configured to not consider the recognized electrical device (3) for controlling the building infrastructure device (2) in case data, optionally statistical data, indicate that the building management system (1) receives the wireless signals (5) during a time greater than a time threshold.

5. The building management system (1) according to claim 4, wherein
- the time threshold is greater or equal to a set use time that is set for an area, in which the building management system (1) is installed.

6. The building management system (1) according to any one of the previous claims, wherein
- the building management system (1) is configured to not consider the recognized electrical device (3) for the control of the building infrastructure device (2) in case the building management system (1) stops receiving the wireless signals (5) after a time smaller than a second time threshold, the second time threshold being smaller or equal to a time, during which a change of a control of the building infrastructure device (2) is not desired.

7. The building management system (1) according to any one of the previous claims, wherein
- the building management system (1) is configured to not consider a further recognized electrical device for controlling the building infrastructure device (2) in case the building management system (1) has already determined that for the recognized electrical device (3) the condition is fulfilled.

8. The building management system (1) according to any one of the previous claims, wherein the building management system (1) is configured to
- determine priorities for the recognized electrical device (3) and one or more further recognized electrical devices with regard to controlling the building infrastructure device (2), and
- increase a priority of the recognized electrical device (3) in case historical data indicate that the recognized electrical device (3) has been located multiple times within a set range around the building infrastructure device (2), the set range being set for controlling the building infrastructure device (2).

9. The building management system (1) according to any one of the previous claims, wherein the building management system (1) is configured to determine that the condition is fulfilled in case
- the recognized electrical device (3) is located within a set range around the building infrastructure device (2), the set range being set for controlling the building infrastructure device (2);
- one or more further electrical devices are recognized by the building management system (1), wherein the recognized electrical device (3) and the recognized one or more further electrical devices are part of a group, and each of the recognized electrical device (3) and the recognized one or more further electrical devices are located within the set range around the location of the building infrastructure device (2); or
- the recognized electrical device (3) has a greatest priority among multiple recognized electrical devices with regard to the control of the building infrastructure device (2).

10. The building management system (1) according to any one of the previous claims, wherein the building management system (1) is configured to adapt the statistical control data associated with the recognized electrical device (3) according to historical data of operation parameters of the building infrastructure device (2) being set when the recognized electrical device (3) is located within a set range around the building infrastructure device (2), the set range being set for controlling the building infrastructure device (2).

11. The building management system (1) according to any one of the previous claims, wherein the building management system (1) stores historical data on at least one of
- one or more recognized electrical devices (3),
- priorities of the one or more recognized electrical devices (3) with regard to controlling one or more building infrastructure devices (2, L1, L2, L3) of the building management system (1),
- distance(s) (d) of the one or more recognized electrical devices (3) with regard to a location of the one or more building infrastructure devices (2, L1, L2, L3) of the building management system (1),
- information on one or more groups of two or more electrical devices of multiple recognized electrical devices (3),
- statistical control data associated with the one or more recognized electrical devices (3), and
- operation parameters of the one or more building infrastructure devices (2).

12. The building management system (1) according to any one of the previous claims, wherein
- the building management system (1) is the building infrastructure device (2, L1).

13. The building management system (1) according to any one of claims 1 to 11, wherein
- the building management system (1) comprises multiple building infrastructure devices (2, L1, L2, L3) and the building infrastructure device (2, L1) is one of the multiple building infrastructure devices (2, L1, L2, L3), wherein
- the building infrastructure device (2, L1) is configured to receive the wireless signals (5) transmitted by the electrical device (3), and
- a control unit of the building infrastructure device (2, L1) and/or a central control unit (7) of the building management system (1) are configured to perform one or more of the further method steps for which the building management system is configured for.

14. The building management system (1) according to claim 13, wherein
- the control unit of the building infrastructure device is configured to
- recognize the electrical device, and
- determine the distance between the location of the building infrastructure device and the location of the recognized electrical device, and
- the central control unit of the building management system is configured to
- determine whether the condition is fulfilled, and
- control the building infrastructure device according to the statistical control data in case that the condition is fulfilled.

15. The building management system (1) according to claim 13 or 14, wherein
- the central control unit of the building management system is configured to
- recognize the electrical device,
- determine the distance between the location of the building infrastructure device and the location of the recognized electrical device,
- determine whether the condition is fulfilled, and
- control the building infrastructure device according to the statistical control data in case that the condition is fulfilled.

16. A system (100) comprising
- a building management system (1) according to any one of the previous claims, and
- an electrical device (3) usable by a person (4); wherein
- the electrical device (3) is configured to transmit the wireless signals (5).

17. A method for controlling a building infrastructure device (2) of a building management system (1), wherein the method comprises
- receiving (S1), by the building infrastructure device (2), wireless signals (5), optionally radio signals, transmitted by an electrical device (3) usable by a person (4), the wireless signals (5) comprising an identifier (ID) identifying the electrical device (3),
- recognizing (S2) the electrical device (3) on the basis of the identifier (ID) in the received wireless signals (5),
**characterized in that**
- determining (S3) a distance (d) between a location of the building infrastructure device (2) of the building management system (1) and a location of the recognized electrical device (3) using the received wireless signals (5),
- determining (S4) on the basis of the determined distance (d) whether a condition for controlling the building infrastructure device (2) according to statistical control data associated with the recognized electrical device (3) is fulfilled, and
- controlling (S5) the building infrastructure device (2) according to the statistical control data in case that the condition is fulfilled.
